(19) Europäisches Patentamt
European Patent Office
Office européen des brevets

(11) EP 0 984 696 B1

(12) **EUROPÄISCHE PATENTSCHRIFT**

(45) Veröffentlichungstag und Bekanntmachung des Hinweises auf die Patenterteilung:
**02.10.2002 Patentblatt 2002/40**

(21) Anmeldenummer: **98929324.6**

(22) Anmeldetag: **15.05.1998**

(51) Int Cl.[7]: **A01N 47/24**
// (A01N47/24, 43:36)

(86) Internationale Anmeldenummer:
**PCT/EP98/02876**

(87) Internationale Veröffentlichungsnummer:
**WO 98/053690 (03.12.1998 Gazette 1998/48)**

# (54) FUNGIZIDE MISCHUNGEN

FUNGICIDAL MIXTURES

MELANGES FONGICIDES

(84) Benannte Vertragsstaaten:
**AT BE CH DE DK ES FI FR GB GR IE IT LI NL PT SE**
Benannte Erstreckungsstaaten:
**SI**

(30) Priorität: **28.05.1997 DE 19722224**

(43) Veröffentlichungstag der Anmeldung:
**15.03.2000 Patentblatt 2000/11**

(73) Patentinhaber: **BASF AKTIENGESELLSCHAFT**
**67056 Ludwigshafen (DE)**

(72) Erfinder:
- **SCHELBERGER, Klaus**
  **D-67161 Gönnheim (DE)**
- **SCHERER, Maria**
  **D-76829 Landau (DE)**
- **SAUTER, Hubert**
  **D-68167 Mannheim (DE)**
- **MÜLLER, Bernd**
  **D-67227 Frankenthal (DE)**
- **BIRNER, Erich**
  **D-67317 Altleiningen (DE)**
- **LEYENDECKER, Joachim**
  **D-68526 Ladenburg (DE)**
- **AMMERMANN, Eberhard**
  **D-64646 Heppenheim (DE)**
- **LORENZ, Gisela**
  **D-67434 Neustadt (DE)**
- **STRATHMANN, Siegfried**
  **D-67117 Limburgerhof (DE)**

(56) Entgegenhaltungen:
**EP-A- 0 741 970**
**WO-A-96/01256**
**WO-A-96/01258**
**WO-A-96/03047**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 984 696 B1

Printed by Jouve, 75001 PARIS (FR)

## Beschreibung

Die vorliegende Erfindung betrifft fungizide Mischungen, welche

a) ein Carbamat der Formel I,

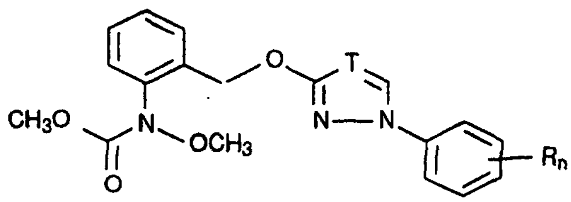

I

in der T CH oder N bedeutet, n für 0, 1 oder 2 steht und R Halogen, $C_1$-$C_4$-Alkyl oder $C_1$-$C_4$-Halogenalkyl bedeutet, wobei die Reste R verschieden sein können, wenn n für 2 steht, und

b) mindestens einen Wirkstoff der Formel II oder III,

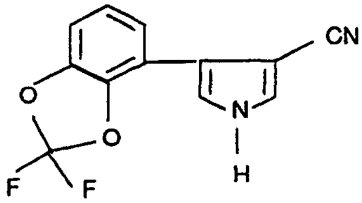

(II)

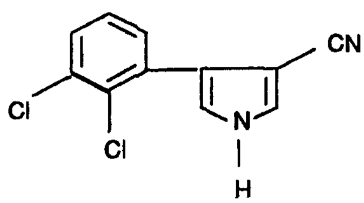

(III)

in einer synergistisch wirksamen Menge enthalten.

Außerdem betrifft die Erfindung Verfahren zur Bekämpfung von Schadpilzen mit Mischungen der Verbindungen I und II oder III und die Verwendung der Verbindungen I und II oder III zur Herstellung derartiger Mischungen.

Die Verbindungen der Formel I, ihre Herstellung und ihre Wirkung gegen Schadpilze sind aus der Literatur bekannt (WO-A 96/01,256 und 96/01,258).

Die Verbindung II ist aus K. Gehmann, R. Nyfeler, A.J. Leadbeater, D. Nevill und D. Sozzi, Proceedings of the Brighton Crop Protection Conference, Pests and Diseases 1990, Vol. 2, S. 399 bekannt (common name: Fludioxinil) und kommerziell im Handel von Fa. Novartis erhältlich.

Die Verbindung III ist aus D. Nevill, R. Nyfeler, D. Sozzi, Proceedings of the Brighton Crop Protection Conference, Pests and Diseases 1988, Vol. 1, S. 65 bekannt (common name: Fenpiclonil)

Im Hinblick auf eine Senkung der Aufwandmengen und eine Verbesserung des Wirkungsspektrums der bekannten Verbindungen lagen der vorliegenden Erfindungen Mischungen als Aufgabe zugrunde, die bei verringerter Gesamtmenge an ausgebrachten Wirkstoffen eine verbesserte Wirkung gegen Schadpilze zeigen (synergistische Mischungen).

Demgemäß wurden die eingangs definierten Mischungen gefunden. Es wurde außerdem gefunden, daß sich bei gleichzeitiger gemeinsamer oder getrennter Anwendung der Verbindungen I und II und/oder III oder bei Anwendung der Verbindungen I und II und/oder III nacheinander Schadpilze besser bekämpfen lassen als mit den Einzelverbindungen.

Die Formel I repräsentiert insbesondere Carbamate, in denen die Kombination der Substituenten einer Zeile

der folgenden Tabelle entspricht:

Tabelle 1:

| Nr. | T | $R_n$ |
|---|---|---|
| I.1 | N | 2-F |
| I.2 | N | 3-F |
| I.3 | N | 4-F |
| I.4 | N | 2-Cl |
| I.5 | N | 3-Cl |
| I.6 | N | 4-Cl |
| I.7 | N | 2-Br |
| I.8 | N | 3-Br |
| I.9 | N | 4-Br |
| I.10 | N | $2\text{-}CH_3$ |
| I.11 | N | $3\text{-}CH_3$ |
| I.12 | N | $4\text{-}CH_3$ |
| I.13 | N | $2\text{-}CH_2CH_3$ |
| I.14 | N | $3\text{-}CH_2CH_3$ |
| I.15 | N | $4\text{-}CH_2CH_3$ |
| I.16 | N | $2\text{-}CH(CH_3)_2$ |
| I.17 | N | $3\text{-}CH(CH_3)_2$ |
| I.18 | N | $4\text{-}CH(CH_3)_2$ |
| I.19 | N | $2\text{-}CF_3$ |
| I.20 | N | $3\text{-}CF_3$ |
| I.21 | N | $4\text{-}CF_3$ |
| I.22 | N | $2,4\text{-}F_2$ |
| I.23 | N | $2,4\text{-}Cl_2$ |
| I.24 | N | $3,4\text{-}Cl_2$ |
| I.25 | N | $2\text{-}Cl, 4\text{-}CH_3$ |
| I.26 | N | $3\text{-}Cl, 4\text{-}CH_3$ |
| I.27 | CH | 2-F |
| I.28 | CH | 3-F |
| I.29 | CH | 4-F |
| I.30 | CH | 2-Cl |
| I.31 | CH | 3-Cl |
| I.32 | CH | 4-Cl |
| I.33 | CH | 2-Br |
| I.34 | CH | 3-Br |
| I.35 | CH | 4-Br |
| I.36 | CH | $2\text{-}CH_3$ |
| I.37 | CH | $3\text{-}CH_3$ |

Tabelle 1: (fortgesetzt)

| Nr. | T | $R_n$ |
|---|---|---|
| I.38 | CH | $4-CH_3$ |
| I.39 | CH | $2-CH_2CH_3$ |
| I.40 | CH | $3-CH_2CH_3$ |
| I.41 | CH | $4-CH_2CH_3$ |
| I.42 | CH | $2-CH(CH_3)_2$ |
| I.43 | CH | $3-CH(CH_3)_2$ |
| I.44 | CH | $4-CH(CH_3)_2$ |
| I.45 | CH | $2-CF_3$ |
| I.46 | CH | $3-CF_3$ |
| I.47 | CH | $4-CF_3$ |
| I.48 | CH | $2,4-F_2$ |
| I.49 | CH | $2,4-Cl_2$ |
| I.50 | CH | $3,4-Cl_2$ |
| I.51 | CH | $2-Cl, 4-CH_3$ |
| I.52 | CH | $3-Cl, 4-CH_3$ |

Besonders bevorzugt werden die Verbindungen I.12, I.23, I.32 und I.38.

Die Verbindungen der Formel I können in Bezug auf die C=Y- bzw. C=CH- oder C=N-Doppelbindungen in der E- oder der Z-Konfiguration (in Bezug auf die Carbonsäurefunktion) vorliegen. Demgemäß können sie in der erfindungsgemäßen Mischung jeweils entweder als reine E- oder Z-Isomere oder als E/Z-Isomerenmischung Verwendung finden. Bevorzugt findet die E/Z-Isomerenmischung oder das Z-Isomer Anwendung, wobei das Z-Isomere besonders bevorzugt ist.

Die C=N-Doppelbindungen der Oximethergruppierungen in der Seitenkette der Verbindungen I können jeweils als reine E- oder Z-Isomere oder als E/Z-Isomerengemische vorliegen. Die Verbindungen I können sowohl als Isomerengemische als auch als reine Isomere in den erfindungsgemäßen Mischungen verwendet werden. Im Hinblick auf ihre Verwendung werden insbesondere Verbindungen I bevorzugt, in denen die endständige Oximethergruppierung der Seitenkette in der cis-Konfiguration vorliegt ($OCH_3$ zu ZR').

Die Verbindungen I sind wegen ihres basischen Charakters in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organische Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc., in Betracht.

Als Metallionen kommen insbesondere die Ionen der Elemente der zweiten Hauptgruppe, insbesondere Calzium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink und andere in Betracht. Besonders bevorzugt sind die Metallionen der Elemente der Nebengruppen der vierten Periode. Die Metalle können dabei in den verschiedenen ihnen zukommenden Wertigkeiten vorliegen.

Bevorzugt setzt man bei der Bereitstellung der Mischungen die reinen Wirkstoffe I und II ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Die Mischungen der Verbindungen I und II bzw. die gleichzeitige gemeinsame oder getrennte Verwendung der Verbindungen I und II zeichnen sich durch eine hervorragende Wirkung gegen ein breites Spektrum von pflanzenpathogenen Pilzen, insbesondere aus der Klasse der Ascomyceten, Deuteromyceten, Phycomyceten und Basidiomyceten, aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben Puccinia-Arten an Getreide, Rhizoctonia-Arten an Baumwolle, Reis und Rasen, Ustilago-Arten an Getreide und Zukkerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Pseudoperonospora-Arten an Kürbisgewächsen und Hopfen, Plasmopara viticola an Reben, Alternaria-Arten an Gemüse und Obst sowie Fusarium- und Verticillium-Arten.

Sie sind außerdem im Materialschutz (z.B. Holzschutz) anwendbar, beispielsweise gegen Paecilomyces variotii.

Die Verbindungen I und II und/oder III können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I und II und/oder III werden üblicherweise in einem Gewichtsverhältnis von 0.05:1 bis 20:1, vorzugsweise 0.1:1 bis 10:1, insbesondere 0.2:1 bis 5:1 (II und/oder III:I) angewandt.

Die Aufwandmengen der erfindungsgemäßen Mischungen liegen je nach Art des gewünschten Effekts für die Verbindungen I bei 0.005 bis 0.5 kg/ha, vorzugsweise 0.05 bis 0.5 kg/ha, insbesondere 0.05 bis 0.2 kg/ha.

Die Aufwandmengen für die Verbindungen II und/oder III liegen entsprechend in der Regel bei 0.01 bis 1 kg/ha, vorzugsweise 0.05 bis 1 kg/ha, insbesondere 0.1 bis 0.8 kg/ha.

Bei der Saatgutbehandlung werden im allgemeinen Aufwandmengen an Mischung von 0,001 bis 100 g/kg Saatgut, vorzugsweise 0,01 bis 50 g/kg, insbesondere 0,01 bis 10 g/kg verwendet.

Sofern für Pflanzen pathogene Schadpilze zu bekämpfen sind, erfolgt die getrennte oder gemeinsame Applikation der Verbindungen I und II und/oder III oder der Mischungen aus den Verbindungen I und II und/oder III durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II und/oder III können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Lauryletherund Fettalkoholsulfaten, sowie Salze sulfatierter Hexa-, Heptaund Octadecanole oder Fettalkoholglycolethern, Kondensationsprodukte von sulfoniertem Naphthalin und seinen Derivaten mit Formaldehyd. Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver, Streu- und Stäubemittel können durch Mischen oder gemeinsames Vermahlen der Verbindungen I und II und/oder III oder der Mischung aus den Verbindungen I und II und/oder III mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I und II und/oder III bzw. der Mischung aus den Verbindungen I und II und/oder III . Die Wirkstoffe werden dabei in einer Reinheit von 90 % bis 100 %, vorzugsweise 95 % bis 100 % (nach NMR- oder HPLC-Spektrum) eingesetzt.

Die Verbindungen I und II und/oder III bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt. Die Anwendung kann vor oder nach dem Befall durch die Schadpilze erfolgen.

Die fungizide Wirkung der Verbindung und der Mischungen läßt sich durch folgende Versuche zeigen:

Die Wirkstoffe werden getrennt oder gemeinsam als 10 %ige Emulsion in einem Gemisch aus 70 Gew.-% Cyclohexanon, 20 Gew.-% Nekanil® LN (Lutensol® AP6, Netzmittel mit Emulgier- und Dispergierwirkung auf der Basis ethoxylierter Alkylphenole) und 10 Gew.-% Emulphor® EL (Emulan® EL, Emulgator auf der Basis ethoxylierter Fettalkohole) aufbereitet und entsprechend der gewünschten Konzentration mit Wasser verdünnt.

Die Auswertung erfolgt durch Feststellung der befallenen Blattflächen in Prozent. Diese Prozent-Werte werden in Wirkungsgrade umgerechnet. Die zu erwartenden Wirkungsgrade der Wirkstoffmischungen werden nach der Colby Formel [R.S. Colby, Weeds 15, 20-22 (1967)] ermittelt und mit den beobachteten Wirkungsgraden verglichen.

Colby Formel:

$$E = x + y + z - x \cdot y \cdot z/100$$

E zu erwartender Wirkungsgrad, ausgedrückt in % der unbehandelten Kontrolle, beim Einsatz der Mischung aus den Wirkstoffen A, B und C in den Konzentrationen a, b und c

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

z der Wirkungsgrad, ausgedrückt in % der unbehandelten Kontrolle, beim Einsatz des Wirkstoffs C in der Konzentration c

Der Wirkungsgrad (**W**) wird nach der Formel von Abbot wie folgt berechnet:

$$W = (1 - \alpha) \bullet 100/\beta$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Anwendungsbeispiel 1 - Wirksamkein gegen *Botrytis cinerea* an Paprikablättern

Paprikasämlinge der Sorte "Neusiedler Ideal Elite" wurden, nachdem sich 4 - 5 Blätter gut entwickelt hatten, mit einer wäßrigen Wirkstoffaufbereitung, die aus einer Stammlösung aus 10 % Wirkstoff, 63 % Cyclohexanon und 27 % Emulgiermittel angesetzt wurde, bis zur Tropfnässe bsprüht. Am nächsten Tag wurden die behandelten Pflanzen mit einer Sporensuspension von *Botrytis cinerea*, die 1,7 x $10^6$ Sporen/ml in einer 2 %igen wäßrigen Biomalzlösung enthielt, inokuliert. Anschließend wurden die Versuchspflanzen in eine Klimakammer mit 22 bis 24°C und hoher Luftfeuchtigkeit gestellt. Nach 5 Tagen konnte das Ausmaß des Pilzbefalls auf den Blättern visuell in % ermittelt werden.

Die Ergebnisse sind den nachfolgenden Tabelle 2 und 3 zu entnehmen.

Tabelle 2

| Wirkstoff | Wirkstoffkonzentration in der Spritzbrühe in ppm | Wirkungsgrad in % der unbehandelten Kontrolle |
|---|---|---|
| Kontrolle (unbehandelt) | (100 % Befall) | 0 |
| Verbindung I.32 | 6,3 | 0 |
| | 3,1 | 0 |
| Verbindung II | 6,3 | 70 |
| | 3,1 | 60 |
| Verbindung III | 6,3 | 50 |
| | 3,1 | 50 |

Tabelle 3

| erfindungsgemäße Mischungen | beobachteter Wirkungsgrad | berechneter Wirkungsgrad*) |
|---|---|---|
| 6,3 ppm I.32 + 6,3 ppm II (Mischung 1 : 1) | 97 | 70 |
| 3,1 ppm I.32 + 3,1 ppm II (Mischung 1 : 1) | 90 | 60 |
| 6,3 ppm I.32 + 6,3 ppm III (Mischung 1 : 1) | 80 | 50 |
| 3,1 ppm I.32 + 3,1 ppm III (Mischung 1 : 1) | 70 | 50 |

*) berechnet nach der Colby-Formel

Aus den Ergebnissen des Versuches geht hervor, daß der beobachtete Wirkungsgrad in allen Mischungsverhältnissen höher ist, als nach der colby-Formel vorausberechnete Wirkungsgrad.

**Patentansprüche**

1. Fungizide Mischung, enthaltend

a) ein Carbamat der Formel I,

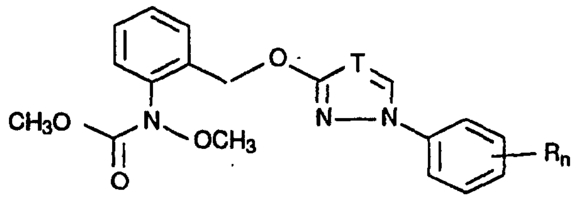

I

in der T CH oder N bedeutet, n für 0, 1 oder 2 steht und R Halogen, $C_1$-$C_4$-Alkyl oder $C_1$-$C_4$-Halogenalkyl bedeutet, wobei die Reste R verschieden sein können, wenn n für 2 steht, und

b) mindestens eine Verbindung der Formeln II oder III,

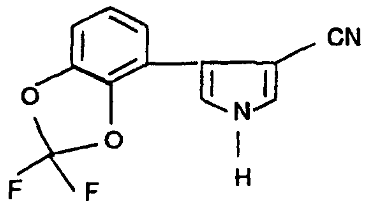

(II)

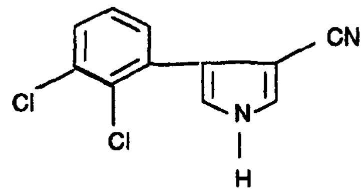

(III)

in einer synergistisch wirksamen Menge.

**2.** Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit einer Verbindung der Formel I gemäß Anspruch 1 und mindestens einer Verbindung der Formel II oder III gemäß Anspruch 1 behandelt.

**3.** Verfahren nach Anspruch 2, **dadurch gekennzeichnet, daß** man die Schadpilze, deren Lebensraum oder die von ihnen freizuhaltenden Pflanzen, Samen, Böden, Flächen, Materialien oder Räume mit 0,005 bis 0,5 kg/ha einer Verbindung I gemäß Anspruch 1 behandelt.

**4.** Verfahren nach Anspruch 2, **dadurch gekennzeichnet, daß** man die Schadpilze, deren Lebensraum oder die von ihnen freizuhaltenden Pflanzen, Samen, Böden, Flächen, Materialien oder Räume mit 0.01 bis 1 kg/ha einer Verbindung II und/oder III gemäß Anspruch 1 behandelt.

## Claims

**1.** A fungicidal mixture, comprising

a) a carbamate of the formula I,

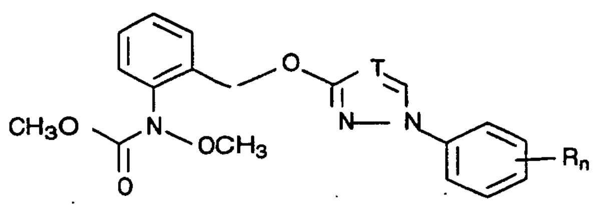

I

where T is CH or N, n is 0, 1 or 2 and R is halogen, $C_1$-$C_4$-alkyl or $C_1$-$C_4$-haloalkyl, it being possible for the radicals R to be different if n is 2, and

b) at least one compound of the formula II or III,

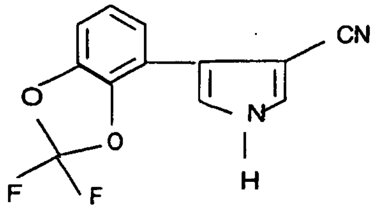

(II)

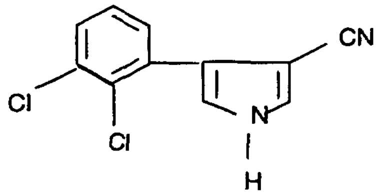

(III)

in a synergistically effective amount.

2. A method for controlling harmful fungi, which comprises treating the harmful fungi, their habitat or the plants, seeds, soils, areas, materials or spaces to be kept free from them with a compound of the formula I as set forth in claim 1 and at least one compound of the formula II or III as set forth in claim 1.

3. A method as claimed in claim 2, wherein the harmful fungi, their habitat or the plants, seeds, soils, areas, materials or spaces to be kept free from them are treated with from 0.005 to 0.5 kg/ha of a compound I as set forth in claim 1.

4. A method as claimed in claim 2, wherein the harmful fungi, their habitat or the plants, seeds, soils, areas, materials or spaces to be kept free from them are treated with from 0.01 to 1 kg/ha of a compound II and/or III as set forth in claim 1.

**Revendications**

1. Mélange fongicide, contenant

a) un carbamate de formule I,

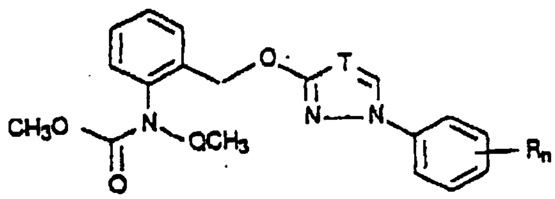

I

dans laquelle T désigne CH ou N, n vaut O, 1 ou 2 et R représente un groupe halogéno, alkyle en $C_1$-$C_4$ ou halogénoalkyle en $C_1$-$C_4$, tandis que les restes R peuvent être différents lorsque n vaut 2, et

b) au moins un composé de formules II ou III,

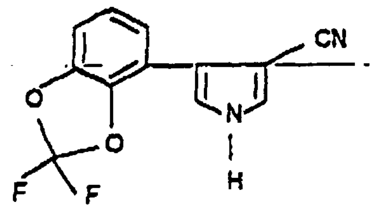

(II)

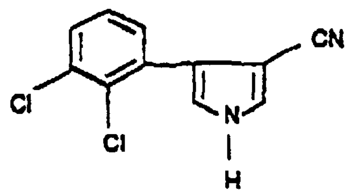

(III)

dans une quantité à activité synergique.

2. Procédé pour la lutte contre les champignons nuisibles, **caractérisé par le fait qu'**on traite les champignons nuisibles, leur biotope ou les plantes, semences, sols, surfaces, matériels ou espaces qui ne doivent pas en comporter avec un composé de formule I selon la revendication 1 et au moins un composé de formule II ou III selon la revendication 1.

3. Procédé selon la revendication 2, **caractérisé par le fait qu'**on traite les champignons nuisibles, leur biotope ou les plantes, semences, sols, surfaces, matériels ou espaces qui ne doivent pas en comporter avec 0,005 à 0,5 kg/ha d'un composé I selon la revendication 1.

4. Procédé selon la revendication 2, **caractérisé par le fait qu'**on traite les champignons nuisibles, leur biotope ou les plantes, semences, sols, surfaces, matériels ou espaces qui ne doivent pas en comporter avec 0,01 à 1 kg/ha d'un composé II et/ou III selon la revendication 1.